# FASCICULE DE BREVET EUROPEEN

(11) **EP 1 159 149 B1**
(45) Date de publication et mention de la délivrance du brevet: **05.10.2005**
(21) Numéro de dépôt: 00910969.5
(22) Date de dépôt: 16.03.2000
(51) Int. Cl.: B60J 7/14

(54) **TOIT REPLIABLE POUR VEHICULE DECOUVRABLE**
FALTDACH FÜR OFFENES FAHRZEUG
FOLDING ROOF FOR CONVERTIBLE VEHICLE

(30) Priorité: 16.03.1999 FR 9903243
(43) Date de publication de la demande: 05.12.2001
(73) Titulaire: Société Européenne des Brevets Automobiles, 75011 Paris (FR)
(72) Inventeur: GUILLEZ, Jean-Marc, 79140 Cerizay (FR); QUEVEAU, Paul, 79140 Cerizay (FR); QUEVEAU, Gérard, F-79140 Le Pin (FR)
(74) Mandataire: Rémont, Claude
(86) Numéro de dépôt international: PCT/FR2000/000646
(87) Numéro de publication internationale: WO 2000/054997

(56) Documents cités:
- EP-A- 0 678 411
- EP-A- 0 884 208
- DE-A- 19 539 085
- FR-A- 713 044

## Description

La présente invention concerne un toit repliable pour véhicule découvrable. Un tel toit ayant pour caractéristiques celles du préambule de la revendication 1 est décrit dans le document EP 0 884 208.

On a décrit dans la demande de brevet français n°98 05 971 du 12 Mai 1998, un toit repliable pour véhicule découvrable qui comprend un élément avant 10 articulé en 11 à un élément arrière 12.

L'élément arrière 12 comporte un élément central 15.

Lorsque les éléments avant, arrière et central, sont en position de fermeture du toit, il convient de les verrouiller ensemble et par rapport à la carrosserie du véhicule.

Ce problème de verrouillage se rencontre dans tous les modèles de toit rigide repliable, quelles que soient les trajectoires respectives des divers éléments de toit mobiles constituant un toit rigide repliable.

De même, lorsque le toit est en position repliée dans le coffre arrière du véhicule, il est nécessaire de verrouiller au moins l'élément arrière du toit à une partie fixe à l'intérieur du coffre.

Le but de la présente invention est d'assurer les verrouillages précités par un système de verrouillage centralisé sûr, efficace et de coût relativement faible.

L'invention vise ainsi un toit repliable pour véhicule découvrable, comprenant un élément de toit avant et un élément de toit arrière, ces deux éléments pouvant être rangés dans le coffre du véhicule, et des verrous pour verrouiller ensemble le bord avant de l'élément avant à la carrosserie du véhicule, et le bord arrière de l'élément avant au bord avant de l'élément arrière, lesdits verrous étant actionnés par des tiges de commande. Suivant l'invention, ce toit est caractérisé en ce que les tiges de commande sont des tiges rotatives reliées à un moteur, les tiges rotatives et les verrous étant agencés de manière telle que la rotation du moteur entraîne la rotation simultanée des tiges de commande et le verrouillage des verrous lorsque le toit recouvre le véhicule.

Selon une version préférée de l'invention, le coffre du véhicule comporte un élément de verrou coopérant avec un élément de verrou prévu sur le bord avant de l'élément arrière, pour verrouiller ce dernier lorsqu'il est en position dans le coffre du véhicule.

D'autres particularités et avantages de l'invention apparaîtront encore dans la description ci-après.

Aux dessins annexés donnés à titre d'exemples non limitatifs :
- la figure 3 est une vue en perspective partielle d'un toit repliable selon l'invention ;
- la figure 4 montre le toit en position repliée dans le coffre arrière du véhicule ;
- la figure 5 est une vue en coupe longitudinale du toit repliable ;
- la figure 6 montre le corps d'un élément de verrou du dispositif de verrouillage ;
- la figure 7 montre le doigt d'un autre élément de verrou du dispositif de verrouillage ;
- la figure 8 montre en coupe le doigt engagé dans le logement du corps du verrou installé entre les éléments de toit avant et arrière ;
- la figure 9 est une vue en perspective d'un autre dispositif de verrouillage du toit repliable selon l'invention ;
- la figure 10 est une vue en coupe suivant A de la figure 9.

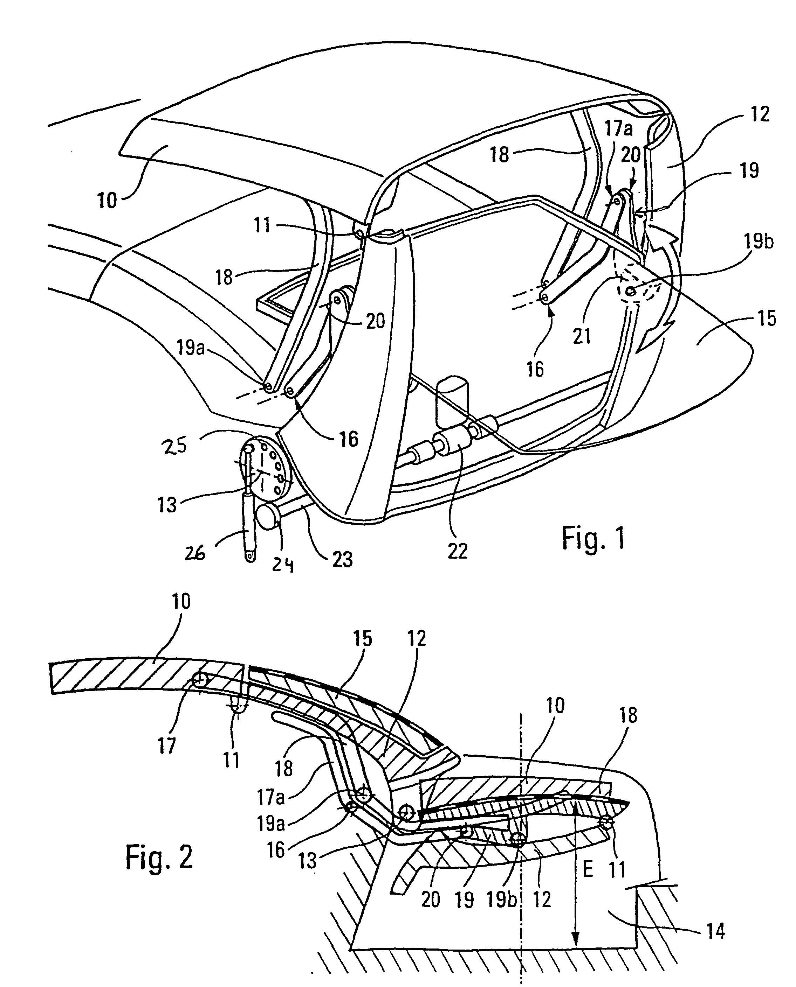

On va décrire ci-dessous un mode de réalisation du toit repliable selon la présente invention adapté au toit repliable représenté aux figures 1 et 2.

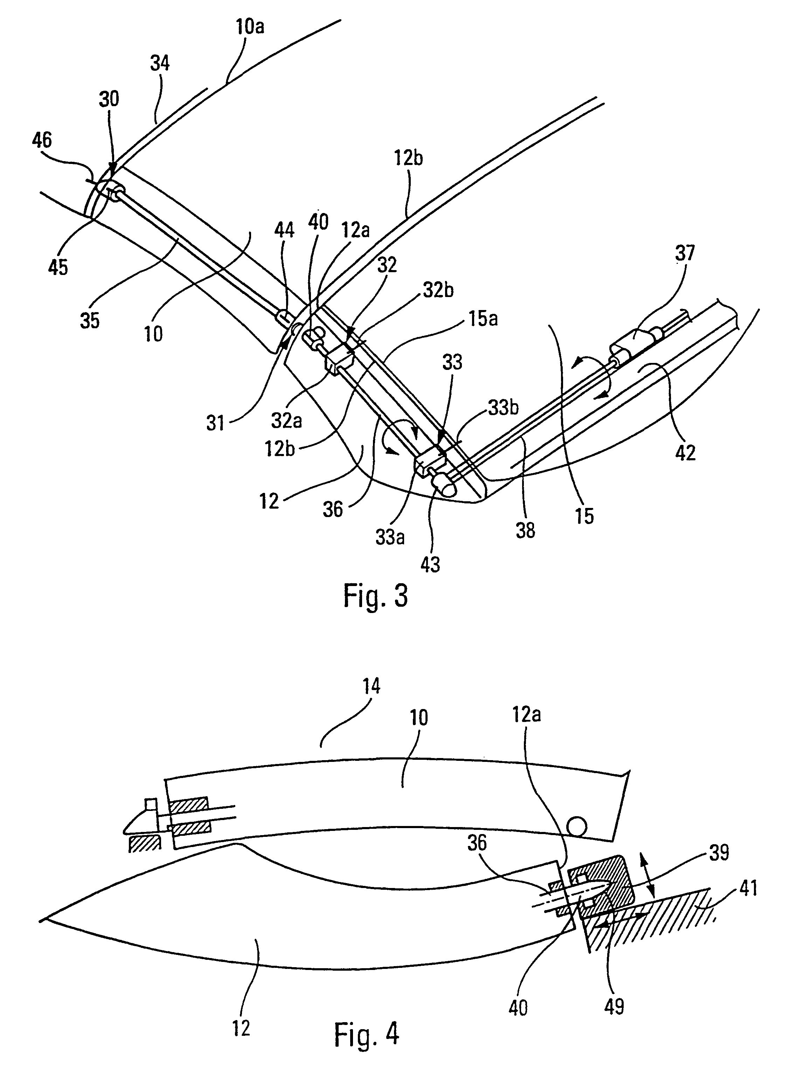

Le dispositif de verrouillage représenté sur la figure 3 comprend des verrous 30, 31, 32, 33 pour verrouiller ensemble :
- le bord avant 10a de l'élément avant 10 à la carrosserie 34 du véhicule ;
- le bord arrière 10b de l'élément avant 10 au bord avant 12a de l'élément arrière 12 ;
- les bords adjacents 12b, 15a, de l'élément arrière 12 et de l'élément central 15.

Ces verrous 30, 31, 32, 33 sont reliés entre eux par des tiges de commande 35, 36 elles-mêmes reliées par une tige 38 à un seul moteur électrique 37 dont la rotation entraîne la rotation simultanée des tiges de commande 35, 36, 38 et le verrouillage des verrous 30, 31, 32, 33 lorsque les éléments de toit 10, 12, 15 recouvrent le véhicule.

D'autre part, comme indiqué sur la figure 4, le coffre 14 du véhicule comporte un élément de verrou 39 solidaire d'une partie fixe 41, coopérant avec un élément de verrou complémentaire 40 prévu sur le bord avant 12a de l'élément arrière 12, pour verrouiller ce dernier lorsqu'il est en position dans le coffre 14 du véhicule (voir plus loin).

On voit également sur la figure 3 que le moteur électrique 37 est fixé à une traverse 42 qui relie la partie arrière des deux éléments latéraux qui constituent l'élément arrière 12.

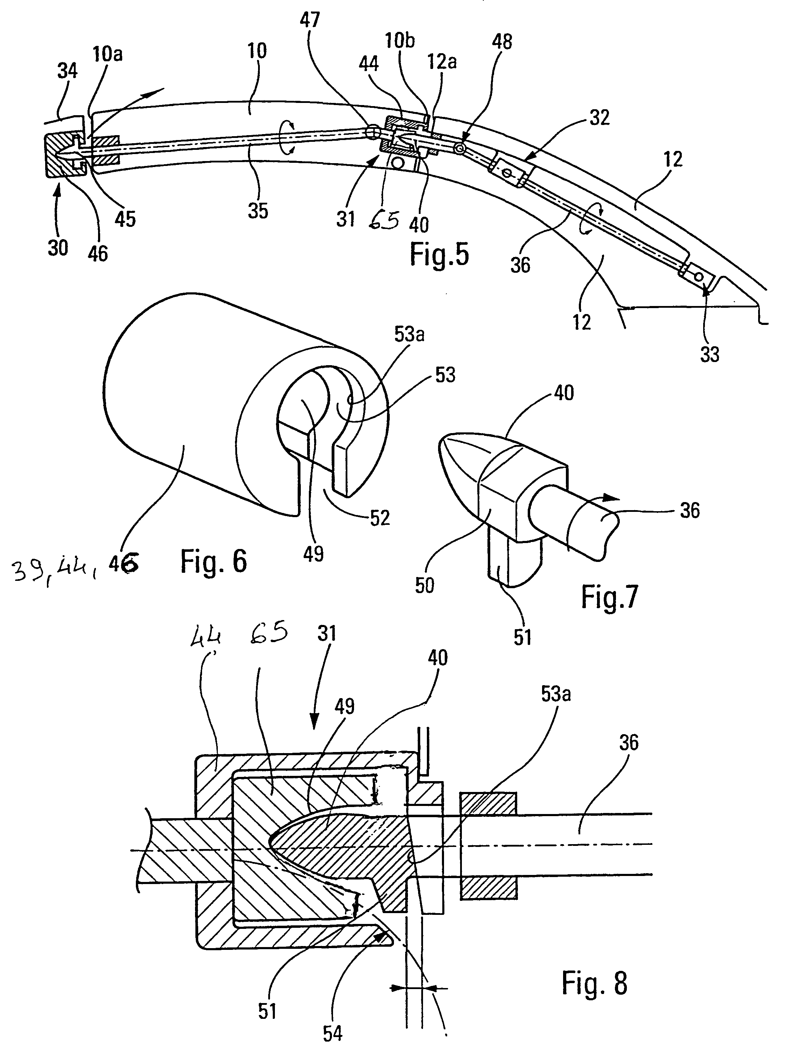

Par ailleurs, le moteur électrique 37 est relié par une tige 38 à un renvoi d'angle 43 situé à l'arrière de l'une des parties latérales de l'élément arrière 12. A partir de ce renvoi d'angle 43 (voir figure 5) s'étend une tige 36 reliée à deux éléments de verrou 32a, 33a, coopérant avec un élément de verrou complémentaire 32b, 33b, fixé à l'élément central 15 pour verrouiller ensemble l'élément arrière 12 à l'élément central 15.

La tige 36 est reliée, d'autre part, à un élément 40 du verrou 31 situé au bord avant 12a de l'élément arrière 12 et coopérant avec un élément de verrou complémentaire 44 du verrou 31 situé au bord arrière 10b de l'élément avant 10 pour verrouiller ensemble l'élément 12 arrière à l'élément avant 10.

L'élément de verrou complémentaire 44 précité est relié par une tige 35 à un élément 45 du verrou 30 situé au bord avant 10a de l'élément avant 10 et coopérant avec un élément de verrou complémentaire 46 fixé à la carrosserie 34 pour verrouiller l'élément avant 10 à cette carrosserie 34.

La figure 5 montre en outre que les tiges 35 et 36 comportent des joints de cardan 47, 48 pour leur permettre de suivre la courbure des éléments de toit 10, 12.

D'autre part, les éléments de verrou destinés à verrouiller l'élément arrière 12 à l'élément avant 10 et l'élément avant 10 à la carrosserie 34 comprennent (voir également les figures 6, 7 et 8) un doigt conique 40, 45 porté par l'extrémité de la tige 36, 35 pouvant s'engager, lors de la fermeture du toit, dans un logement 49 de forme conique complémentaire au doigt 40, 45 ménagé dans un corps 44, 46 porté, le premier, par le bord arrière 10b de l'élément de toit avant 10, et, le second, par la carrosserie 34, ou dans le corps 39 prévu dans le coffre 14.

Par ailleurs, le doigt 40 porté par l'extrémité de la tige 36 adjacente au bord avant 12a de l'élément arrière 12 et au bord arrière 10b de l'élément avant 10 comporte des moyens coopérant avec des moyens complémentaires prévus dans le logement 49 correspondant permettant de rendre les deux tiges 36, 35 solidaires en rotation lorsque l'élément arrière 12 et l'élément avant 10 sont en position de fermeture du toit. Ces moyens sont constitués par des plats 50 du doigt 40 coïncidant avec des plats complémentaires (non représentés) prévus sur les parois intérieures du logement 49.

Pour permettre à la tige 36 d'entraîner en rotation la tige 35, le verrou 31 comprend une douille 65 montée pivotante à l'intérieur du corps 44. La douille 65 présente à son extrémité arrière le logement 49 adapté à recevoir le doigt 40 de la tige 36 et est reliée à son extrémité avant à la tige 35 de manière à être solidaire en rotation avec ladite tige 35.

Ainsi, la tige 36 entraîne en rotation, par l'intermédiaire de son doigt 40 introduit dans le logement 49 de la douille 65, ladite douille 65 qui entraîne à son tour la tige 35.

Par contre le logement 49 est ménagé directement à l'intérieur des corps 46 et 39.

On voit également sur les figures 7 et 8 que chaque doigt 40 porte en arrière de son extrémité un ergot 51 pouvant s'engager dans une ouverture axiale 52 du corps 44, 46, 39, puis après rotation venir en prise dans une gorge 53 dudit corps 44, 46, 39 (voir figure 6) pour verrouiller le verrou correspondant 30, 31.

Par ailleurs, la face arrière 53a de la gorge 53 est hélicoïdale, de façon que lors de la rotation de l'ergot 51, ce dernier s'appuie sur cette face hélicoïdale 53a pour serrer le doigt 40 dans le logement 49 du corps 44, 46 ou 39.

Comme également indiqué sur la figure 8, un dégagement vers le bas 54 permet d'adapter la direction d'entrée du doigt 40 dans le logement 49. Cette direction est donnée par l'articulation autour de leur axe 11 des deux éléments de toit 10 et 12.

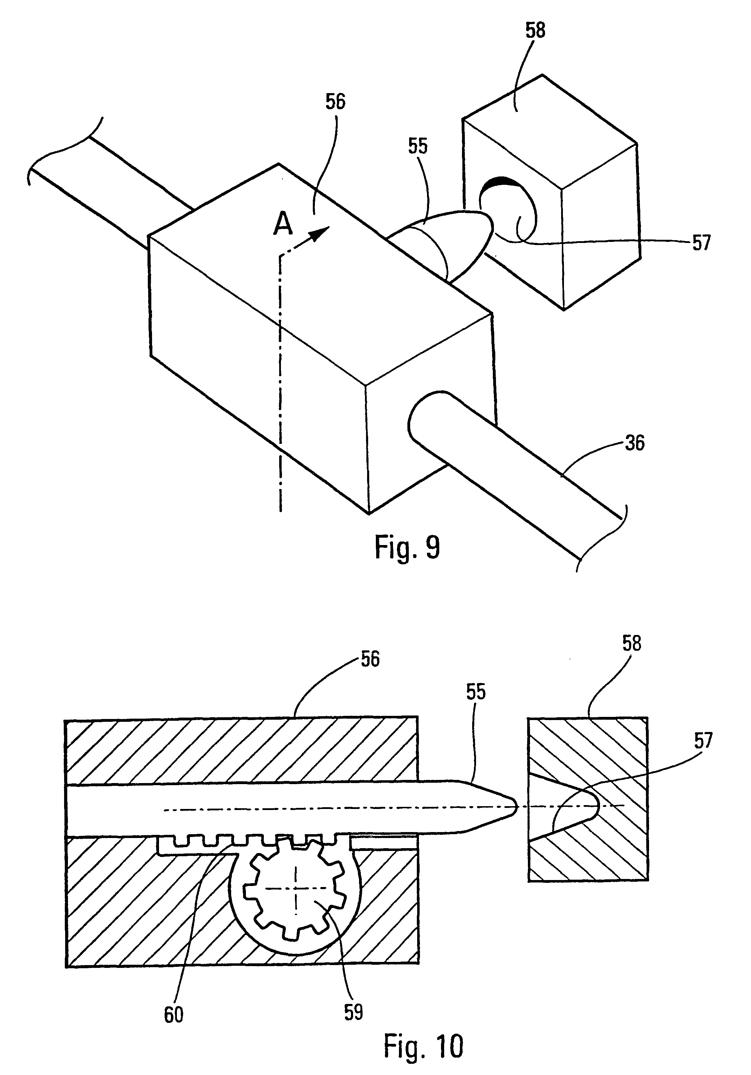

Les figures 9 et 10 montrent des éléments de verrou destinés à verrouiller l'élément arrière 12 à l'élément central 15. Ces derniers comprennent un doigt conique 55 monté coulissant dans un corps 56 solidaire de l'élément arrière 12. Ce doigt 55 peut s'engager dans un logement 57 de forme conique complémentaire réalisé dans un corps 58 solidaire de l'élément central 15. Par ailleurs, la tige 36 située entre le renvoi d'angle 43 et le bord avant 12a de l'élément arrière 12 comporte des moyens coopérant avec des moyens complémentaires associés au doigt 55 pour transformer le mouvement de rotation de la tige 36 en un mouvement de translation du doigt 55.

Dans l'exemple de la figure 8, ces moyens comprennent un pignon 59 porté par la tige 36 engrené avec une crémaillère 60 portée par le doigt 55.

Le dispositif de verrouillage que l'on vient de décrire comprend des séries de tiges 35, 36, 38 de renvoi d'angle 43 et d'éléments de verrou disposés symétriquement de part et d'autre de l'axe du véhicule.

On va maintenant expliquer le fonctionnement du dispositif de verrouillage que l'on vient de décrire.

On supposera que l'on vient d'actionner la commande qui permet de déplacer les éléments de toit 10, 12, 15, situés au départ en position repliée dans le coffre, vers la position de fermeture du toit.

En fin de course de fermeture, les doigts 40 des verrous 30, 31 s'engagent dans les logements 49 des corps 46, 44. Les ergots 51 des doigts 40 portés par les tiges 35, 36 sont décalés angulairement de 180° comme indiqué sur la figure 5 et ne sont pas engagés dans la gorge hélicoïdale 53.

Par ailleurs, les doigts 55 des verrous 32, 33 ne sont pas encore verrouillés dans les logements 57 correspondants.

Pour verrouiller les éléments de toit entre eux et à la carrosserie, il suffit de commander la mise en route du seul moteur électrique 37. Le moteur électrique 37 entraîne dans sa rotation les tiges 38 et 36.

Le doigt 40 porté par la tige 36 tourne par exemple de trois quarts de tour environ.

L'ergot 51 du doigt 40 s'engage dans la gorge hélicoïdale 53, ce qui permet de verrouiller avec serrage l'élément arrière 12 contre l'élément avant 10.

En même temps, la rotation de trois quarts de tour de la tige 36 déplace les doigts 55 des verrous 32 et 33, par l'intermédiaire du pignon 59 et de la crémaillère 60 dans les logements des corps 58 solidaires de l'élément central 15, ce qui a pour effet de verrouiller ensemble l'élément arrière 12 et l'élément central 15.

Par ailleurs, la rotation de la tige 36 entraîne également en rotation pour trois quarts de tour la tige 35.

L'ergot 51 porté par le doigt 40 de l'extrémité de la tige 35 se verrouille dans le logement 49 du corps 46 fixé à la carrosserie 34.

L'unique moteur électrique 37 assure ainsi le verrouillage de l'ensemble des verrous.

Pour ouvrir le toit, le fonctionnement est inverse de celui décrit ci-dessus. La mise en route du moteur 37 commande successivement par l'intermédiaire des tiges 38, 36, 35, le déverrouillage des verrous 33, 32, 31 et 30.

Un autre dispositif de commande déplace alors les éléments du toit 10, 12 dans le coffre, dans lequel ceux-ci viennent se replier l'un sur l'autre, comme montré à la figure 4.

Dans cette position, le moteur 37 commande le verrouillage des éléments de toit 10, 12 par l'intermédiaire des doigts de verrouillage 40 et d'éléments tels que 39 fixés au châssis 41.

Bien entendu, l'invention n'est pas limitée à l'exemple que l'on vient de décrire et on peut apporter à celui-ci de nombreuses modifications sans sortir du cadre de l'invention.

En particulier, les tiges pivotantes et les éléments de verrou décrits ci-dessus peuvent être montés sur d'autres types de toit repliable que celui décrit ci-dessus, comportant au moins deux éléments de toit mobiles. Il convient alors d'adapter la position de l'ouverture axiale 52 et celle du dégagement 54 de chaque verrou en fonction de la trajectoire du bord correspondant de chaque élément de toit.

## Revendications

1. Toit rigide repliable pour véhicule découvrable, comprenant au moins un élément de toit avant (10) et un élément de toit arrière (12), ces deux éléments de toit (10, 12) étant chacun mobile l'un par rapport à l'autre autour de l'articulation (11) et par rapport à la carrosserie (34) et pouvant être rangés dans le coffre (14) du véhicule, ledit toit comprenant des verrous (30, 31) pour verrouiller ensemble au moins le bord avant (10a) de l'élément avant (10) à la carrosserie (34) du véhicule et le bord arrière (10b) de l'élément avant (10) au bord avant (12a) de l'élément arrière (12), lesdits verrous (30, 31) étant actionnés par des tiges de commande (35, 36), **caractérisé en ce que** les tiges de commande (35, 36) sont des tiges rotatives reliées à un moteur (37), les tiges rotatives (35, 36) et les verrous (30, 31) étant agencés de manière telle que la rotation du moteur (37) entraîne la rotation simultanée des tiges de commande (35, 36) et le verrouillage des verrous (30, 31) lorsque le toit recouvre le véhicule.

2. Toit conforme à la revendication 1, **caractérisé en ce que** le coffre (14) du véhicule comporte un élément de verrou (39) coopérant avec un élément de verrou (40) prévu sur le bord avant (12a) de l'élément arrière (12), pour verrouiller ce dernier lorsqu'il est en position dans le coffre (14) du véhicule.

3. Toit conforme à l'une des revendications 1 ou 2, **caractérisé en ce que** le moteur (37) est fixé à une traverse (42) portée par l'élément arrière (12) et **en ce que** le moteur (37) est avantageusement relié par une tige (38) à un renvoi d'angle (43) situé à l'arrière de l'une au moins des parties latérales de l'élément arrière (12), renvoi d'angle (43) à partir duquel s'étend une tige de rotation (36) portée par l'élément de toit arrière (12).

4. Toit conforme à l'une quelconque des revendications précédentes, **caractérisé en ce que** la tige rotative (36) portée par l'élément de toit arrière (12) est reliée à un élément de verrou (40) situé au bord avant (12a) de l'élément arrière (12) et coopérant avec un élément de verrou complémentaire (44) situé au bord arrière (10b) de l'élément avant (10) pour verrouiller ensemble l'élément arrière (12) à l'élément avant (10), ledit élément de verrou complémentaire (44) étant relié par une tige (35) à un élément de verrou (45) situé au bord avant (10a) de l'élément avant (10) et coopérant avec un élément de verrou complémentaire (46) fixé à la carrosserie (34) pour verrouiller ensemble l'élément avant (10) à cette carrosserie (34).

5. Toit conforme à la revendication 4, **caractérisé en ce que** les éléments de verrou destinés à verrouiller l'élément arrière (12) à l'élément avant (10) et l'élément avant (10) à la carrosserie (34) comprennent un doigt (40, 45) porté par l'extrémité d'une tige (36, 35) correspondante et pouvant s'engager, lors de la fermeture du toit, dans un logement (49) de forme complémentaire au doigt (40, 45) et ménagé dans un corps (44, 46) respectif porté, le premier, par le bord arrière (10b) de l'élément de toit avant (10), et, le second, par la carrosserie (34).

6. Toit conforme à la revendication 5, **caractérisé en ce que** le doigt (40) porté par l'extrémité de la tige (36) adjacente au bord avant (12a) de l'élément arrière (12) et au bord arrière (10b) de l'élément avant (10) comporte des moyens coopérant avec des moyens complémentaires prévus dans le logement (49) du corps (44) correspondant permettant de rendre les deux tiges (36, 35) solidaires en rotation lorsque l'élément arrière (12) et l'élément avant (10) sont en position de fermeture du toit.

7. Toit conforme à la revendication 6, **caractérisé en ce que** le logement (49) du corps (44) est ménagé à l'extrémité arrière d'une douille (65) montée pivotante à l'intérieur dudit corps (44) et reliée à la tige rotative (35) portée par l'élément de toit avant (10) de manière à être solidaire en rotation de ladite tige (35).

8. Toit conforme à l'une des revendications 5 à 7, **caractérisé en ce que** chaque doigt (40) porte en arrière de son extrémité un ergot (51) pouvant s'engager dans une ouverture axiale (52) du corps (44, 46, 39), puis après rotation venir en prise dans une gorge (53) dudit corps (44, 46, 39).

9. Toit conforme à la revendication 8, **caractérisé en ce que** la face arrière (53a) de la gorge (53) est hélicoïdale, de façon que lors de la rotation de l'ergot (51), ce dernier s'appuie sur cette face hélicoïdale (53a) pour serrer le doigt (40) dans le logement (49) du corps (44, 46, 39).

10. Toit conforme à l'une quelconque des revendications précédentes, l'élément de toit arrière (12) comportant un élément central (15) qui s'étend jusqu'à l'articulation (11) entre les éléments avant (10) et arrière (12), cet élément central (15) étant articulé par rapport à l'élément arrière (12), **caractérisé en ce qu'**il comprend des verrous (32, 33) pour verrouiller ensemble les bords adjacents (12b, 15a) de l'élément arrière (12) et de l'élément central (15), et **en ce que** la tige (36) est reliée à au moins un élément de verrou (32a, 33a) coopérant avec un élément de verrou complémentaire (32b, 33b) fixé à l'élément central (15) pour verrouiller ensemble l'élément arrière (12) à l'élément central (15).

11. Toit conforme à la revendication 10, **caractérisé en ce que** les éléments de verrou destinés à verrouiller l'élément arrière (12) à l'élément central (15) comprennent un doigt (55) monté coulissant dans un corps (56) solidaire de l'élément arrière (12), pouvant s'engager dans un logement (57) complémentaire réalisé dans un corps (58) solidaire de l'élément central (15), la tige (36) située entre le renvoi d'angle (43) et le bord avant (12a) de l'élément arrière (12) comportant des moyens coopérant avec des moyens complémentaires associés au doigt (55) pour transformer le mouvement de rotation de la tige (36) en un mouvement de translation du doigt (55).

12. Toit conforme à la revendication 11, **caractérisé en ce que** lesdits moyens comprennent un pignon (59) porté par la tige (36) engrené avec une crémaillère (60) portée par le doigt (55).

13. Toit conforme à la revendication 5 ou à l'une des revendications qui en dépendent, **caractérisé en ce que** le doigt (40, 45, 55), et le logement (49, 57) sont coniques.

14. Toit conforme à la revendication 3 ou à l'une des revendications qui en dépendent, **caractérisé en ce qu'**il comprend des séries de tiges, de renvoi d'angle et d'éléments de verrou disposés symétriquement de part et d'autre de l'axe du véhicule.

15. Véhicule découvrable comprenant un toit rigide conforme à l'une quelconque des revendications précédentes.

## Patentansprüche

1. Starres Faltdach für offenes Fahrzeug, mit wenigstens einem vorderen Dachelement (10) und einem hinteren Dachelement (12), wobei diese beiden Dachelemente (10, 12) jeweils gegeneinander um die gelenkige Verbindung und in Bezug auf die Karosserie (34) des Fahrzeugs bewegbar sind und in dem Kofferraum (14) des Fahrzeugs verstaut werden können, wobei das Dach Verschlüsse (30, 31) zum gemeinsamen Verriegeln wenigstens des Vorderrands (10a) des vorderen Elements (10) mit der Karosserie (34) des Fahrzeugs und des Hinterrands (10b) des vorderen Elements (10) mit dem Vorderrand (12a) des hinteren Elements (12) umfasst, wobei die Verschlüsse (30, 31) durch Steuerstangen (35, 36) betätigt werden, **dadurch gekennzeichnet, dass** die Steuerstangen (35, 36) mit einem Motor (37) verbundene Drehstangen sind, wobei die Drehstangen (35, 36) und die Verschlüsse (30, 31) in der Weise angeordnet sind, dass die Drehung des Motors (37) die gleichzeitige Drehung der Steuerstangen (35, 36) und die Verriegelung der Verschlüsse (30, 31) bewirkt, wenn das Dach das Fahrzeug bedeckt.

2. Dach nach Anspruch 1, **dadurch gekennzeichnet, dass** der Kofferraum (14) des Fahrzeugs ein Verriegelungselement (39) umfasst, das mit einem auf dem Vorderrand (12a) des hinteren Elements (12) angeordneten Verriegelungselement (40) zusammenwirkt, um das hintere Element (12) zu verriegeln, wenn es in Position in dem Kofferraum (14) des Fahrzeugs ist.

3. Dach nach einem der Ansprüche 1 oder 2, **dadurch gekennzeichnet, dass** der Motor (37) an einem von dem hinteren Element (12) getragenen Querträger (42) befestigt ist, und dass der Motor (37) vorteilhaft durch eine Stange (38) mit einem winkelvorgelege (43) verbunden ist, das sich im Rücken mindestens eines der seitlichen Teile des hinteren Elements (12) befindet, wobei sich abgehend von dem Winkelvorgelege (43) eine von dem hinteren Dachelement (12) getragene Drehstange (36) erstreckt.

4. Dach nach einem der vorherigen Ansprüche, **dadurch gekennzeichnet, dass** die von dem hinteren Dachelement (12) getragene Drehstange (36) mit einem Verriegelungselement (40) verbunden ist, das sich am vorderrand (12a) des hinteren Elements (12) befindet und mit einem am Hinterrand (10b) des vorderen Elements (10) befindlichen, komplementären Verriegelungselement (44) zusammenwirkt, um das hintere Element (12) mit dem vorderen Element (10) gemeinsam zu verriegeln, wobei das komplementäre Verriegelungselement (44) durch eine Stange (35) mit einem verriegelungselement (45) verbunden ist, das sich am Vorderrand (10a) des vorderen Elements (10) befindet und mit einem an der Karosserie (34) befestigten komplementären Verriegelungselement (46) zusammenwirkt, um das vordere Element (10) mit dieser Karosserie (34) gemeinsam zu verriegeln.

5. Dach nach Anspruch 4, **dadurch gekennzeichnet, dass** die Verriegelungselemente, welche das hintere Element (12) mit dem vorderen Element (10) und das vordere Element (10) mit der Karosserie (34) verriegeln sollen, einen von dem Ende einer zugehörigen Stange (36, 35) getragenen zapfen (40, 45) umfassen, der bei der Schließung des Dachs in eine Aufnahme (49) greifen kann, welche eine zum Zapfen (40, 45) komplementäre Form hat und in einem zugehörigen Rumpf (44, 46) ausgebildet ist, wobei der erste von dem Hinterrand (10b) des vorderen Dachelements (10) und der zweite von der Karosserie (34) getragen ist.

6. Dach nach Anspruch 5, **dadurch gekennzeichnet, dass** der von dem dem Vorderrand (12a) des hinteren Elements (12) und dem Hinterrand (10b) des vorderen Elements (10) angrenzenden Ende der Stange (36) getragene Zapfen (40) Mittel umfasst, die mit in der Aufnahme (49) des zugehörigen Rumpfs (44) vorgesehenen komplementären Mitteln zusananenwirken, die es ermöglichen, die beiden Stangen (36, 35) drehfest zu machen, wenn das hintere Element (12) und das vordere Element (10) in Schließposition des Dachs sind.

7. Dach nach Anspruch 6, **dadurch gekennzeichnet, dass** die Aufnahme (49) des Rumpfs (44) am hinteren Ende einer Hülse (65) ausgebildet ist, die drehbar im Innern des Rumpfs (44) montiert und mit der von dem vorderen Dachelement (10) getragenen Drehstange (35) verbunden ist, um drehfest mit der Stange (35) zu sein.

8. Dach nach einem der Ansprüche 5 bis 7, **dadurch gekennzeichnet, dass** jeder Zapfen (40) hinter seinem Ende einen Nocken (51) trägt, der in eine axiale Öffnung (52) des Rumpfs (44, 46, 39) greifen kann, der dann nach Drehung in Eingriff in eine Kehle (53) des Rumpfs (44, 46, 39) gelangt.

9. Dach nach Anspruch 8, **dadurch gekennzeichnet, dass** die Hinterseite (53a) der Kehle (53) schraubenförmig ist, derart, dass bei der Drehung des Nockens (51) dieser sich auf diese schraubenförmige Seite (53a) legt, um den Zapfen (40) in der Aufnahme (49) des Rumpfs (44, 46, 39) zu klemmen.

10. Dach nach einem der vorigen Ansprüche, bei welchem das hintere Dachelement (12) ein zentrales Element (15) umfasst, das sich bis zur gelenkigen Verbindung (11) zwischen den vorderen (10) und hinteren (12) Elementen erstreckt, wobei dieses zentrale Element (15) an das hintere Element (12) angelenkt ist, **dadurch gekennzeichnet, dass** es verschlüsse (32, 33) umfasst, um die angrenzenden Ränder (12b, 15a) des hinteren Elements (12) und des zentralen Elements (15) gemeinsam zu verriegeln, und dass die Stange (36) mit wenigstens einem Verriegelungselement (32a, 33a) verbunden ist, das mit einem an dem zentralen Element (15) befestigten, komplementären Verriegelungselement (32b, 33b) zusanunenwirkt, um das hintere Element (12) mit dem zentralen Element (15) gemeinsam zu verriegeln.

11. Dach nach Anspruch 10, **dadurch gekennzeichnet, dass** die Verriegelungselemente, welche das hintere Element (12) mit dem zentralen Element (15) verriegeln sollen, einen Zapfen (55) umfassen, der in einem mit dem hinteren Element (12) verbundenen Rumpf (56) verschiebbar montiert ist, der in eine komplementäre Aufnahme (57) greifen kann, die in einem mit dem zentralen Element (15) verbundenen Rumpf (58) ausgebildet ist, wobei die Stange (36), die sich zwischen dem Winkelvorgelege (43) und dem Vorderrand (12a) des hinteren Element's (12) befindet, Mittel umfasst, die mit zu dem Zapfen (55) gehörenden, komplementären Mitteln zusammenwirken, um die Drehbewegung der Stange (36) in eine Translationsbewegung des Zapfens (55) umzuwandeln.

12. Dach nach Anspruch 11, **dadurch gekennzeichnet, dass** die Mittel ein von der Stange (36) getragenes Ritzel (59) umfassen, das mit einer von dem zapfen (55) getragenen Zahnstange (60) verzahnt ist.

13. Dach nach Anspruch 5 oder einem der Ansprüche, die davon abhängig sind, **dadurch gekennzeichnet, dass** der Zapfen (40, 45, 55) und die Aufnahme (49, 57) konisch sind.

14. Dach nach Anspruch 3 oder einem der Ansprüche, die davon abhängig sind, **dadurch gekennzeichnet, dass** es Serien von Stangen, Winkelvorgelege und Verriegelungselementen aufweist, die sich symmetrisch beiderseits der Achse des Fahrzeugs angeordnet sind.

15. Offenes Fahrzeug mit einem starren Faltdach nach einem der vorherigen Ansprüche.

## Claims

1. Folding hard top roof for a convertible vehicle, comprising at least one front roof element (10) and one rear roof element (12), said two roof elements (10, 12) each being movable relative to each other about the articulation and to the vehicle body (34) and capable of being stored in the vehicle boot (14), said roof comprising locks (30, 31) for locking together at least the front edge (10a) of the front element (10) to the vehicle body (34), and the rear edge (10b) of the front element (10) to the front edge (12a) of the rear element (12), said locks (30, 31) being actuated by control rods (35, 36), **characterised in that** the control rods (35, 36) are rotating rods connected to a motor (37), the rotating rods (35, 36) and the locks (30, 31) being arranged such that the rotation of the motor (37) causes the control rods (35, 36) to rotate simultaneously and the locks (30, 31) to be engaged when the roof covers the vehicle.

2. Roof according to claim 1, **characterised in that** the boot (14) of the vehicle includes a lock element (39) co-operating with a lock element (40) provided on the front edge (12a) of the rear element (12), for locking the latter when it is positioned in the vehicle boot (14).

3. Roof according to any one of claims 1 or 2, **characterised in that** the motor (37) is fixed to a cross beam (42) supported by the rear element (12) and **in that** the motor (37) is advantageously connected by a rod (38) to a bevel gear assembly (43) located in the rear part of at least one of the side portions of the rear element (12), from which bevel gear assembly (43) there extends one rotation rod (36) supported by the rear roof element (12).

4. Roof according to any one of the preceding claims, **characterised in that** the rotating rod (36) supported by the rear roof element (12) is connected to a lock element (40) located on the front edge (12a) of the rear element (12) and co-operating with a complementary lock element (44) located on the rear edge (10b) of the front element (10) for locking together the rear element (12) to the front element (10), said complementary lock element (44) being connected by a rod (35) to a lock element (45) located on the front edge (10a) of the front element (10) and co-operating with a complementary lock element (46) attached to the vehicle body (34) for locking together the front element (10) to said body (34).

5. Roof according to claim 4, **characterised in that** the lock elements for locking the rear element (12) to the front element (10) and the front element (10) to the vehicle body (34) comprise a finger (40, 45) carried by the end of a corresponding rod (36, 35) and capable of being engaged, when the roof is being closed, in a housing (49) having a shape complementary to that of the finger (40, 45) and formed within a respective body (44, 46), the first of which is supported by the rear edge (10b) of the front roof element (10) and the second of which is supported by the vehicle body (34).

6. Roof according to claim 5, **characterised in that** the finger (40) carried by the end of the rod (36) adjacent to the front edge (12a) of the rear element (12) and to the rear edge (10b) of the front element (10) includes means that co-operate with complementary means provided within the housing (49) of the corresponding body (44) for making the two rods (36, 35) rotationally integral when the rear element (12) and the front element (10) are in the closed position of the roof.

7. Roof according to claim 6, **characterised in that** the housing (49) of the body (44) is formed at the rear end of a socket (65) mounted so as to be pivoted within said body (44) and being connected to the rotating rod (35) supported by the front roof element (10) so as to be rotationally integral with said rod (35).

8. Roof according to any one of claims 5 to 7, **characterised in that** each finger (40) carries, at the rear of its end, a pin (51) that can be engaged in an axial opening (52) of the body (44, 46, 39), and then, after having rotated, capable of engaging a groove (53) of said body (44, 46, 39).

9. Roof according to claim 8, **characterised in that** the rear face (53a) of the groove (53) is of helical shape, so that when the pin (51) rotates, it rests against this helical face (53a) for clamping the finger (40) in the housing (49) of the body (44, 46, 39).

10. Roof according to any one of the preceding claims, the rear roof element (12) including a centre element (15) which extends to the articulation (11) between the front (10) and rear (12) elements, said centre element (15) being articulated relative to the rear element (12), **characterised in that** it comprises locks (32, 33) for locking together the adjacent edges (12b, 15a) of the rear element (12) and the centre element (15), and **in that** the rod (36) is connected to at least one lock element (32a, 33a) co-operating with a complementary lock element (32b, 33b) fixed to the centre element (15) for locking together the rear element (12) to the centre element (15).

11. Roof according to claim 10, **characterised in that** the lock elements for locking the rear element (12) to the centre element (15) comprise a finger (55) which is mounted so as to slide within a body (56) integral with the rear element (12), capable of being engaged in a complementary housing (57) formed in a body (58) integral with the centre element (15), the rod (36) located between the bevel gear assembly (43) and the front edge (12a) of the rear element (12) including means that co-operate with complementary means associated with the finger (55) for converting the rotation movement of the rod (36) into a trailslation movement of the finger (55).

12. Roof according to claim 11, **characterised in that** said means comprise a pinion (59) carried by the rod (36) and meshing with a rack (60) carried by said finger (55).

13. Roof according to claim 5 or any one of the claims dependent thereon, **characterised in that** the finger (40, 45, 55) and the housing (49, 57) are conical.

14. Roof according to claim 3 or any one of the claims dependent thereon, **characterised in that** it comprises a series of rods, bevel gear assembly and lock elements arranged symmetrically on each side of the vehicle axis.

15. A convertible vehicle comprising a hard top roof according to any one of the preceding claims.
